# EUROPÄISCHE PATENTANMELDUNG

(11) **EP 0 642 733 A1**
(43) Veröffentlichungstag der Anmeldung: **15.03.1995**
(21) Anmeldenummer: 94113534.5
(22) Anmeldetag: 30.08.1994
(51) Int. Cl.: A01D 78/10

(54) **Doppelkreiselschwader**

(30) Priorität: 15.09.1993 DE 93130982 U
(71) Anmelder: GREENLAND GMBH & CO. KG, D-78244 Gottmadingen (DE)
(72) Erfinder: Streicher, Gerhard, D-87634 Günzach (DE)
(74) Vertreter: Grünecker, Kinkeldey, Stockmair & Schwanhäusser Anwaltssozietät

(57) **Zusammenfassung**

Bei einem Doppelkreiselschwader mit einem an beiden Seiten je ein Kreiselsystem (8, 8') führenden Fahrgestell (1), an dem jedes Kreiselsystem (8, 8') um eine etwa parallel zur Längsmittelachse (12) des Fahrgestells liegende erste Pendelachse (13) pendelbeweglich ist, sind die beiden Kreiselsysteme (8, 8') zusätzlich um je eine etwa quer zur Längsmittelachse (12) verlaufende zweite Pendelachse (14) voneinander unabhängig pendelbeweglich, und weisen die Kreiselsysteme (8, 8') je eine die Höhenlage des Bodens (19) abtastendes und die Pendelbewegung des Kreiselsystems um die zweite Pendelachse (14) steuerndes Stützrad (17) auf.

## Beschreibung

Die Erfindung betrifft einen Doppelkreiselschwader der im Oberbegriff des Anspruchs 1 enthaltenen Art.

Bei bekannten Doppelkreiselschwadern der vorstehend genannten Art sind die beiden Kreiselsysteme in ihrer Aufhängung derart miteinander gekoppelt, daß beim Überfahren einer quer zur Fahrtrichtung verlaufenden Bodenwelle eine hohenmäßige Anpassung der beiden Kreiselsysteme an das Gelände nur gemeinsam über die Unterlenker der Zugmaschine erfolgen kann. Auf diese Weise kann sich jedoch der Doppelkreiselschwader Unebenheiten des Bodens nur schlecht anpassen. Es besteht infolgedessen insbesondere bei großer Arbeitsbreite und welligem Geläde die Gefahr, daß entweder die Zinken der Kreiselarme das Heu nicht einwandfrei erfassen oder, daß die Grasnarbe durch den Doppelkreiselschwader beschädigt wird.

Der Erfindung liegt daher die Aufgabe zugrunde, einen Doppelkreiselschwader der eingangs genannten Art so auszubilden, daß sich die beiden Kreiselsysteme besonders gut auch stärkeren Unebenheiten des Geländes anpassen können.

Diese Aufgabe wird erfindungsgemäß mit den Merkmalen des Anspruchs 1 gelöst.

Bei dieser Ausbildung des Doppelkreiselschwaders können die beiden Kreiselsysteme unabhängig voneinander Pendelbewegungen jeweils um ihre erste und zweite Pendelachse durchführen (d.h. im Achsen, die etwa parallel und quer zur Längsmittelachse des Doppelkreiselschwaders verlaufen). Auf diese Weise ist auch bei einer großen Arbeitsbreite des Gerätes eine einwandfreie Anpassung an starke Unebenheiten des Geländes möglich.

Gemäß Anspruch 2 lassen sich die Kreiselsysteme zur Verringerung der Transportbreite um die Schwenkgelenke nach oben einklappen. Im Betrieb arbeiten die Schwenkgelenke und die ersten Pendelachsen zur Bodenanpassung jedes Kreiselssystems zusammen.

Bei der Ausbildung gemäß Anspruch 3 erfolgen die Relativbewegungen zwischen dem Kreiselsystem und dem Querträger bei der durch das Abtasten des Stützrades gesteuerten Pendelbewegung am äußeren Ende des Querträgers.

Gemäß Anspruch 4 ergibt sich eine feinfühlige Bodenanpassung, da das Stützrad das Kreiselsystem bei einer Bodenunebenheit frühzeitig um die zweite Pendelachse verstellt.

Bei der Ausführungsform gemäß Anspruch 5 sind die seitlichen Stützräder für die Bodenanpassung des Kreiselsystems um die erste Querachse verantwortlich.

Günstige Krafteinleitungsverhältnisse und ein stabiler auf des Kreiselsystems sind bei der Ausführungsform gemäß Anspruch 6 gegeben.

Bei der Ausbildung gemäß Anspruch 7 ist die zweite Pendelachse wirkungsmäßig zwischen dem äußeren Ende des Querträgers und der ersten Pendelachse vorgesehen, während die erste Pendelachse wirkungsmäßig zwischen dem Kreiselsystem und der zweiten Pendelachse vorgesehen ist. Es ergeben sich dadurch günstige Kraftübertragungsverhältnisse bei den Pendelbewegungen um die beiden Pendelachsen. Die Relativlagen zwischen den Pendelachsen können jedoch auch vertauscht werden.

Bei der Ausführungsform gemäß Anspruch 8 ist die zweite Pendelachse zum Schwenkgelenk des Querträgers nach innen versetzt, während die erste Pendelachse zwischen dem äußeren Ende des Querträgers und dem Kreiselsystem direkt angeordnet ist. Zum Schwenken des Kreiselsystems um die zweite Pendelachse wird der Querträger um seine Längsachse oder um eine zu seiner Längsachse parallele Achse verdreht.

Die innenliegenden Schwenkgelenke zwischen den Querträgern und der Zentralstrebe des Fahrgestells können gegebenenfalls entfallen, da jedes Kreiselsystem gegebenenfalls nur um die erste Schwenkachse in eine Transportstellung hochgeschwenkt werden kann.

Ein Ausführungsbeispiel der Erfindung ist in der Zeichnung veranschaulicht. Es zeigen:
- Fig. 1: eine Aufsicht auf einen Doppelkreiselschwader;
- Fig. 2: eine Seitenansicht (Teilansicht); und
- Fig. 3,4,5: Detailvariationen, je in Seitenansicht und in Draufsicht.

Der dargestellte Doppelkreiselschwader ist zum Anbau an eine (nicht dargestellte) landwirtschaftliche Zugmaschine bestimmt und enthält ein Fahrgestell 1 mit zwei von einer Hinterachse 2 getragenen Rädern 3, 4 und einer Zentralstrebe 5.

Mit der Zentralstrebe 5 sind über Schwenkgelenke 6, 6' Querträger 7, 7' verbunden, die zwei Kreiselsysteme 8, 8' tragen. Da die Kreiselsysteme 8, 8' gleichartig ausgebildet sind, genügt im folgenden die Beschreibung des Kreiselsystems 8.

Das Kreiselsystem 8 enthält eine Anzahl von Kreiselarmen 9, die mit Zinken 9a besetzt sind und von einer an die Zapfwelle der Zugmaschine anschließbaren Antriebseinrichtung gesteuert angetrieben werden. Zu dieser (in der Zeichnung nur angedeuteten) Antriebseinrichtung gehört u.a. eine Antriebswelle 10 sowie eine Steuereinrichtung 11, die bei der Drehbewegung der Kreiselarme 9 um die Achse des Kreiselsystems 8 eine funktionsgerechte Stellung der Zinken 9a gewährleistet.

Das Kreiselsystem 8 ist am Querträger 7 mittels einer etwa parallel zur Längsmittelachse 12 des Doppelkreiselschwaders verlaufenden ersten Pendelachse 13 pendelbeweglich angeordnet.

Am äußeren Ende des Querträgers 7 ist weiterhin eine etwa in Achsrichtung dieses Querträgers angeordnete zweite Pendelachse 14 vorgesehen, so daß das Kreiselsystem 8 zusätzlich auch um diese etwa quer zur Längsmittelachse des Doppelkreiselschwaders verlaufende zweite Pendelachse pendelbeweglich ist.

Damit können beide Kreiselsysteme 8, 8' unabhängig voneinander jeweils um zwei senkrecht zueinander stehende Pendelachsen 13, 14 pendeln und sich auf diese Weise ideal etwaigen Unebenheiten des Bodens anpassen.

Das Kreiselsystem 8 enthält zwei seitliche Stützräder 15, 16, die - in Fahrtrichtung betrachtet - kurz hinter der Quermittelebene des Kreiselsystems angeordnet sind. Außerdem ist das Kreiselsystem 8 mit einem in Fahrtrichtung vor dem Kreiselsystem angeordneten Stützrad 17 versehen, das über einen Ausleger 18 mit der doppeltpendelbeweglich aufgehängten Steuereinrichtung 11 des Kreiselsystems 8 verbunden ist. Dieses Stützrad 17 tastet die jeweilige Höhenlage des Bodens 19 ab und steuert die Pendelbewegung des Kreiselsystems 8 um die zweite Pendelachse 14. Die Pendelbewegung des Kreiselsystems 8 um die erste Pendelachse 13 wird durch die beiden Stützräder 15, 16 gesteuert, die an seitlichen Auslegern 20, 21 sitzen.

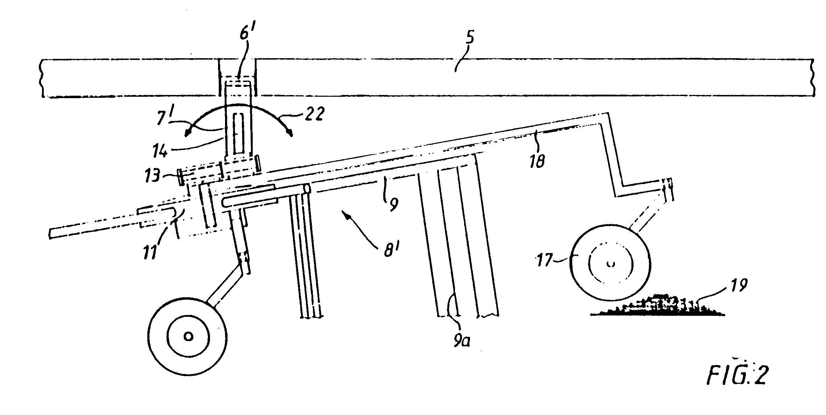

Fig. 2 läßt die Funktion der zweiten Pendelachse 14 und des Stützrades 17 besonders deutlich erkennen (bei Betrachtung der Fig. 2 ist zu berücksichtigen, daß der Querträger 7' gegenüber der Horizontalen etwas geneigt ist, und zwar vom Schwenkgelenk 6' zum Kreiselsystem 8' hin abfällt, so daß die in Achsrichtung des Querträgers 7' verlaufende zweite Pendelachse 14 in Fig. 2 sichtbar wird). Die Pendelbewegung, die das Kreiselsystem 8' um die zweite Pendelachse 14 ausführen kann, ist in Fig. 2 durch den Doppelpfeil 22 angedeutet. Läuft das Stützrad 17 (wie in Fig. 2 angenommen) auf eine Welle des Bodens 19 auf, so wird das Kreiselsystem 8' um die zweite Pendelachse 14 so weit geschwenkt, daß die Zinken 9a der Kreiselarme 9 das Heu auch im Bereich der Bodenunebenheiten einwandfrei erfassen, ohne jedoch die Grasnarbe zu beschädigen.

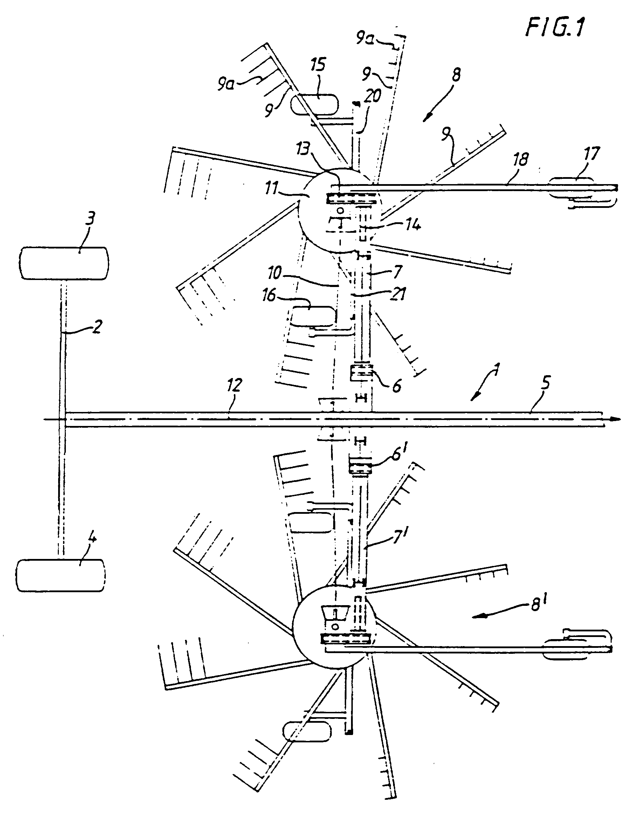

Die beiden Kreiselsysteme 8, 8' sind ggfs. um die Schwenkgelenke 6, 6' zwischen einer abgesenkten Arbeitsstellung (in Fig. 1 dargestellt) und einer angehobenen Transportstellung schwenkbeweglich. Auf diese Weise läßt sich die Breite des Doppelkreiselschwaders für den Transport wesentlich verringern.

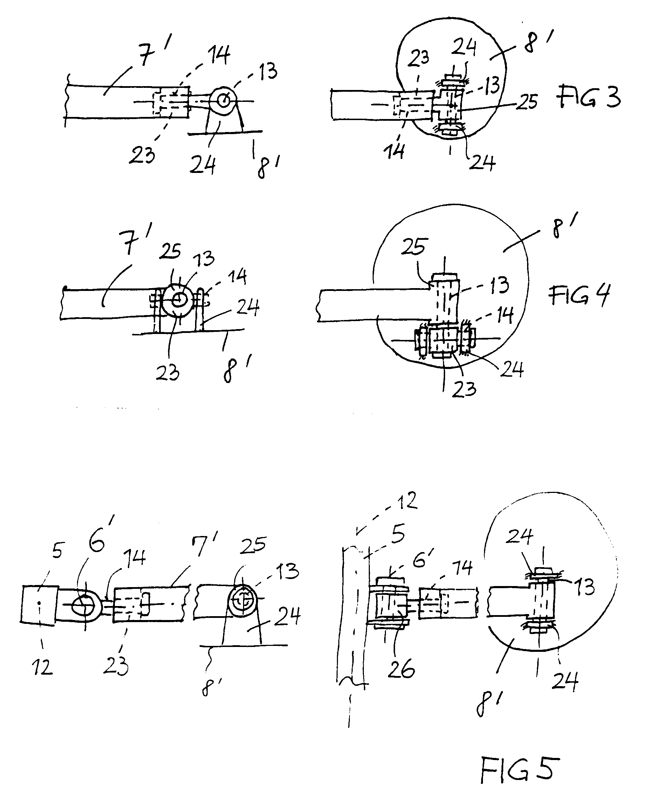

In den Fig. 3, 4 und 5 sind Detailvariationen zur Anordnung der ersten und zweiten Pendelachsen 13, 14 angedeutet.

In Fig. 3, die funktionell den Fig. 1 und 2 entspricht, ist die zweite Pendelachse 14 im Querträger 7' in etwa mit dessen Längsachse fluchtend in einem Gelenk 23 drehbar gelagert. An der zweiten Pendelachse 14 ist außerhalb des äußeren Endes des Querträgers 7 ein Lagerauge 25 angebracht, in dem die erste Schwenkachse 13 schwenkbar gelagert ist und Lagerböcke 24 durchsetzt, die am Kreiselssystem 8' befestigt sind.

In Fig. 4 sind die Relativlagen der ersten und zweiten Schwenkachsen 13, 14 gegenüber Fig. 3 vertauscht. Das Lagerauge 25 ist am äußeren Ende des Querträgers 7 festgelegt und wird von der ersten Gelenkachse 13 durchsetzt. Die erste Gelenkachse 13 trägt ein Gelenk 23, an dem die zweite Pendelachse 14, z.B. in Form zweier Achsstummel angeordnet ist und in Lagerböcke 24 am Kreiselsystem 8' eingreift.

Bei der Ausführungsvariante gemäß Fig. 5 ist die zweite Pendelachse 14 am inneren Ende des Querträgers 7 in dem Gelenk 23 um die Längsachse des Querträgers 7 drehbar und mit einem Lagerauge 26 verbunden, das im Schwenkgelenk 6' in etwa parallel zur Längsmittelachse 12 der Zentralstrebe 5 gelagert ist. Am äußeren Ende des Querträgers 7' ist das Lagerauge 25 festgelegt, das von der ersten Pendelachse 13 durchsetzt wird, die in die Lagerböcke 24 des Kreiselssystems 8' eingreift.

## Patentansprüche

1. Doppelkreiselschwader, enthaltend
**a)** ein zum Anbau an eine landwirtschaftliche Zugmaschine bestimmtes, mit Rädern (3, 4) versehenes Fahrgestell (1),
**b)** zwei auf unterschiedlichen Seiten der Längsmittelachse (12) des Fahrgestells (1) an diesem angeordnete Kreiselsysteme (8, 8'), die jeweils eine Anzahl von mit Zinken (9a) versehenen Kreiselarmen (9) aufweisen und um eine etwa parallel zur Längsmittelachse (12) des Doppelkreiselschwaders verlaufende erste Pendelachse (13) pendelbeweglich sind,
**c)** sowie eine an die Zapfwelle der Zugmaschine anschließbare Antriebseinrichtung (10, 11) für den gesteuerten Antrieb der Kreiselarme (9),
**dadurch gekennzeichnet**, daß die beiden Kreiselsysteme (8, 8')
**d)** zusätzlich um je eine etwa quer zur Längsmittelachse (12) des Doppelkreiselschwaders verlaufende zweite Pendelachse (14) unabhängig voneinander pendelbeweglich sind, und
**e)** je ein die Höhenlage des Bodens (19) abtastendes und die Pendelbewegung des betreffenden Kreiselsystems um die zweite Pendelachse (14) steuerndes Stützrad (17) aufweisen.

2. Doppelkreiselschwader nach Anspruch 1, **dadurch gekennzeichnet**, daß die beiden Kreiselsystem (8, 8') von zwei Querträgern (7, 7') getragen werden, die an ihren inneren Enden mit einer Zentralstrebe (5) des Fahrgestells (1) über je ein Schwenkgelenk (6, 6') derart verbunden sind, daß die beiden Kreiselsysteme (8, 8') zwischen einer abgesenkten Arbeitsstellung und einer angehobenen Transportstellung schwenkbeweglich sind, und daß die beiden Kreiselsysteme (8, 8') mittels der ersten Pendelachsen (13) an den äußeren Enden der beiden Querträger (7, 7') aufgehängt sind.

3. Doppelkreiselschwader nach wenigstens einem der Ansprüche 1 oder 2, **dadurch gekennzeichnet**, daß die zweite Pendelachse (14) jeweils am äußeren Ende des zugehörigen Querträgers (7, 7') angeordnet ist und in etwa in Längsrichtung des Querträgers (7, 7') verläuft.

4. Doppelkreiselschwader nach Anspruch 1, **dadurch gekennzeichnet**, daß das Stützrad (17) in Fahrtrichtung vor dem Kreiselsystem (8, 8') angeordnet ist.

5. Doppelkreiselschwader nach wenigstens einem der Ansprüche 1 bis 4, **dadurch gekennzeichnet**, daß zwei weitere und in etwa quer zur Längsmittelachse (12) aufeinander ausgerichtete, seitliche Stützräder (15, 16) mit kurzem Abstand hinter der Quermittelebene jedes Kreiselsystems (8, 8') an diesem vorgesehen sind.

6. Doppelkreiselschwader nach Anspruch 5, **dadurch gekennzeichnet**, daß die erste Gelenkachse zwischen den und oberhalb der beiden seitlichen Stützräder (15, 16) angeordnet ist, und daß die Stützräder (15, 16) die Pendelbewegung des Kreiselsystems (8, 8') um die erste Gelenkachse (13) steuern.

7. Doppelkreiselschwader nach wenigstens einem der Ansprüche 1 bis 6, **dadurch gekennzeichnet**, daß die erste, das Kreiselsystem (8, 8') pendelfähig lagernde Pendelachse (13) relativ zur Längsachse des Querträgers (7, 7') um die zweite, am äußeren Ende des Querträgers (7, 7') angeordnete Pendelachse (14) schwenkbar ist.

8. Doppelkreiselschwader nach wenigstens einem der Ansprüche 1 bis 6, **dadurch gekennzeichnet**, daß der Querträger (7, 7') um die zweite, in etwa zu seiner Längsachse parallele Pendelachse (14) drehbar ist, die an der der Zentralstrebe (5) abgewandten Seite des Schwenkgelenks (6, 6') am inneren Ende des Querträgers (7, 7') angeordnet ist, und daß die erste Pendelachse (13) direkt am äußeren Ende des Querträgers (7, 7') angeordnet ist.
